# EUROPEAN PATENT APPLICATION

(11) **EP 1 375 432 A1**
(43) Date of publication of application: **02.01.2004**
(21) Application number: 02713224.0
(22) Date of filing: 28.03.2002
(51) Int. Cl.: C02F 1/32, C02F 1/36, A62D 3/00, B01J 19/10, B01J 19/12

(54) **METHOD AND DEVICE FOR DECOMPOSING ENVIRONMENTAL POLLUTANTS**

(30) Priority: 28.03.2001 JP 2001092353; 23.10.2001 JP 2001324766
(71) Applicant: FUJI ELECTRIC CO., LTD., Kawasaki-shi, Kanagawa 210-0856 (JP)
(72) Inventor: KAWAKAMI, Kouji, c/o FUJI ELECTRIC CO., LTD., Kawasaki-shi, Kanagawa 210-0856 (JP); KITAIDE, Yujiro, c/o FUJI ELECTRIC CO., LTD., Kawasaki-shi, Kanagawa 210-0856 (JP); KATO, Nobuhisa, c/o FUJI ELECTRIC CO., LTD., Kawasaki-shi, Kanagawa 210-0856 (JP)
(74) Representative: Hoffmann, Eckart, Dipl.-Ing.
(86) International application number: PCT/JP2002/003070
(87) International publication number: WO 2002/079096

(57) **Abstract**

The present invention provides a method and a device, by which it is possible to decompose and treat a large amount of organic halogen compounds, etc. which are environmental pollutants, to a low concentration range at which it is dischargeable as waste liquor to sewage in a short time, and it is also possible to decompose organic substances and nitrogen or phosphorus compounds which are hardly decomposable by oxidation.

To a sample solution 20 contained in a reaction vessel 10a in which an aqueous solution containing environmental pollutants is stored, for example, ultrasonic waves 50 are irradiated from a transducer 30a disposed at the central bottom portion of the reaction vessel 10a, and at the same time, ultraviolet rays are irradiated from an ultraviolet lamp 40a disposed at the peripheral edge of the reaction vessel 10a. In this instance, the ultraviolet lamp 40a is disposed at a position such that it does not interfere with the path of travel of ultrasonic waves 50.

## Description

### Technical Field

The present invention relates to a method and device for decomposing various pollutants in environment to make them harmless, more particularly, to a method and device for simply and efficiently decomposing organic solvents such as organic halogen compounds contained in soil, ground water, industrial waste water, etc., and organic substances, nitrogen or phosphorus compounds, etc. contained in river water, lakes and marshes, etc.

### Background Art

Among organic solvents, particularly, organic halogen compounds such as tetrachloroethylene, trichloroethylene and dichloromethane, have been used as detergents showing excellent dissolving power to fat and oil, etc. in various industries, laundries, etc. In recent years, their carcinogenesis has been criticized, and discharge thereof into environment has been limited. However, pollution by organic chlorine compounds to environment such as air, public waters or soil is still unsolved, and the use of alternatives for solvents or a treatment for making the solvent harmless after use, are demanded.

Similarly, ones which have been used as a refrigerant or an insulating oil, such as chlorofluorocarbon or polychloride biphenyl (PCB), and dioxin evolved when the incineration temperature is low in the presence of chlorine compounds in a refuse incineration, etc., is a type of organic halogen compounds, and retention thereof in environment is a problem due to its toxicity and hardly decomposable property.

Many of the above organic halogen compounds are volatile, and easily volatilize in air. As a method for removing the organic halogen compounds contained in polluted soil or ground water or industrial water utilizing such a property, a method in which these are subjected to aeration by e.g. air blow and discharged in atmosphere, and a method in which organic halogen compounds are transferred into a gas phase by aeration, recovered by an adsorbent such as activated carbon, and incinerated as waste products, are now mainly practiced in view of costs and simplicity.

However, the aeration method has a problem that harmful substances are diffused in air as they are and thus cause air pollution. Further, the activated carbon adsorption method has a limit in the adsorption amount per activated carbon unit amount or per unit time. Accordingly, in a treatment of waste water containing pollutants in a high concentration, there are problems that costs will be high due to the increased frequency of replacement and the pollutants can not be adsorbed sufficiently to a low concentration and might cause leakage to outside of system. Further, in both systems, the pollutants are simply transferred and the harmful substances themselves are not chemically changed. Particularly, when the activated carbon having the pollutants adsorbed thereto is incinerated, the above virulent dioxin might be generated. Accordingly, both methods have problems.

Under such circumstances, many researches have been extensively made on a method for decomposing various environmental pollutants such as organic halogen compounds to make them harmless, and many methods have been reported, for example, a single treatment by ozone, ultraviolet rays, electrolysis, a solid catalyst (mainly a photocatalyst) or supercritical water; a mixed treatment of them with other method; and a pro-oxidation treatment such as ozone and ultraviolet rays, ozone and hydrogen peroxide, or ultraviolet rays and hydrogen peroxide. However, none of these methods fulfill necessary conditions for practical application i.e. (1) safe, simple and sure, (2) no generation of secondary harmful substances, and (3) low cost. Accordingly, a more simple and efficient treatment method is demanded.

On the other hand, methods wherein the volatile organic halogen compounds are decomposed by irradiation of ultrasonic waves into water have been studies in recent years (J. Phys. Chem., 1991, 95, p.3630-3638, etc.). It is estimated that the reaction mechanism of decomposition by ultrasonic waves comprises two types i.e. thermal decomposition by means of cavitation bubbles, and a reaction with radicals formed by cavitation (Environ. Sci. Technol., 1996, 30, p.1133-1138, etc.).

Namely, at first, by the irradiation with ultrasonic waves into water, water which has received sound pressure is compressed by a positive sound pressure and then, when the pressure is reduced by a negative pressure cycle, water is partly cut off, and vacuum cavities called cavitation bubbles are formed (for example, at most 100 µm with the frequency of a few 10 kHz). At this time, when the cavitation bubbles are formed, volatile harmful substances in the solution, such as organic halogen compounds, volatilize into the bubbles and penetrate therein. Then, the bubbles are crushed by the subsequent positive sound pressure and thereby collapsed, and water molecules around the bubbles dash at once towards the center of collapsed bubbles, and the molecules vigorously collide one another, then by the instantaneous adiabatic compression, this system is rendered into a high temperature and high pressure condition at a level of a few thousands □ and a few thousands atmospheric pressure. At this time, the organic halogen compounds, etc. are thermally decomposed at the time of compression of bubbles and converted into harmless carbon dioxide gas and halogen ions.

On the other hand, along with the formation of cavitation bubbles, in the vicinity thereof, the following reaction occurs by the thermal decomposition of water molecules and H radicals and OH radicals are formed.

H₂O → H· + ·OH

Among them, OH radicals are more oxidative than ozone as indicated in Table 1 and has a low selectivity of reaction substances and a high activity, and thus take a main part of the reaction, thereby thermally decomposing the above volatile substances, and non-volatile substances such as ionic substances which hardly volatile or penetrate into the cavitation bubbles, to make them harmless.

**Table 1**

| Oxidizing agent | Reaction | Oxidation potential (V) |
|---|---|---|
| Fluorine | F₂ + 2e = 2F⁻ | 2.87 |
| Hydroxyl radical (OH radical) | ·OH + H⁺ + e = H₂O (acidic side) ·OH + e = OH⁻ (alkaline side) | 2.80 (2.02) |
| Ozone | O₃ + 2H⁺ + 2e = H₂O + O₂ | 2.07 |
| Hydrogen peroxide | H₂O₂ + 2H⁺ +2e = 2H₂O | 1.77 |
| Permanganic acid | MnO₄⁻ + 8H⁺ +5e = Mn²⁺ + 4H₂O | 1.67 |
| Chlorine | Cl₂ + 2e = Cl⁻ | 1.36 |

In this case, the decomposition speed depends on the frequency of the irradiated ultrasonic waves, but the formation and collapse of cavitation bubbles i.e. thermal decomposition and oxidative decomposition by radicals are repeated with a cycle of a few µ seconds to a few tens µ seconds, thereby conducting the decomposition with good efficiency.

However, in the above prior art, although it is possible to decompose the volatile organic halogen compounds, etc. by means of the safe and simple irradiation of ultrasonic waves, practical application to devices has been difficult due to the following problems.

Namely, in a case where only ultrasonic waves are used, the decomposition speed is high when the concentration of the volatile substances as a subject of decomposition is high, but as the decomposition further proceeds and the concentration of residual substances decreases, the decomposition speed tends to gradually decrease. As a result, the efficiency of decomposition decreases and the decomposition take a long time, whereby it is difficult to rapidly treat a large amount of harmful substances.

This can be explained as follows. First, in a high concentration range of the volatile substances, molecules of the volatile substances volatilize in a large amount and transfer into cavitation bubbles formed by irradiation of ultrasonic waves, and rapidly thermally decomposed at the high temperature and high pressure reaction site. Then, when the decomposition proceeds to a medium concentration range, molecules which volatilize and transfer into cavitation bubbles decrease, and water around the bubbles volatilize and the vapor transfer into the bubbles to supplement the decrease, and then OH radicals are formed by thermal decomposition of vapor. In this range, thermal decomposition of molecules as themselves in the bubbles and oxidative decomposition by OH radicals at the bubble interface are competitively caused.

Further, when the decomposition proceeds to a low concentration range, the molecules of the volatile substances exist in a metastable state in a liquid phase in such a manner that they penetrate into interstices of water molecules bonded by hydrogen bond (called as hydrophobic hydration). Accordingly, substantially no molecules volatilize and transfer into cavitation bubbles, and the ratio of vapor penetrating into the bubbles increases. Thus, while the produced amount of OH radicals at the bubble interface increases, the following recombination reaction occurs by two reasons, i.e. the molecules of volatile substances existing at the bubble interface are small in amount and the lifetime and diffusion length of OH radicals are extremely short due to its high activity, whereby the recombination reaction is caused, i.e. hydrogen peroxide is formed in the liquid phase and the oxidation reaction of this hydrogen peroxide takes a main part of the decomposition.

·OH + ·OH = H₂O₂

Here, since it is apparent from Table 1 that the oxidative power of hydrogen peroxide is weaker than OH radicals or ozone, the decomposition speed tends to decrease at the end stage of reaction.

As mentioned hereinbefore, the method of the prior art for decomposing volatile organic halogen compounds by simply irradiating ultrasonic waves to make them harmless, have problems that if the decomposition operation is carried out up to a low concentration level at which it can be discharged as waste water to a sewerage, etc., it will take a long time, whereby such a treatment can not be made efficiently, and that if it is attempted to treat a large amount at once, the apparatus will become large in size to make up for the reduction of the treating speed.

Further, as the organic substances contained in river water, lakes and marshes, etc., non-volatile substances such as nitrogen or phosphorus compounds, etc. are present in a large amount other than a halogen, and it is also desired to be capable of decomposing these substances. However, since these are non-volatile, molecules containing a lot of hydrophobic groups such as benzene rings show a high ratio of transferring to the bubble interface, whereas molecules containing a lot of hydrophilic groups such as OH groups show a high ratio of remaining in a liquid phase. Accordingly, the above prior art have a problem that since substantially no molecules volatilize and transfer into cavitation bubbles, the molecules transferred to the gas-liquid interface can be expected to undergo oxidative decomposition by OH radicals, but hydrophilic molecules remaining in the liquid phase undergoes decomposition mainly by hydrogen peroxide, and thus in some molecular construction, decomposition is infeasible by lack of oxidative power.

Accordingly, it is an object of the present invention to provide a method and a device by which it is possible to treat and decompose in a large amount in a short time volatile substances such as organic halogen compound, etc. in waste water up to a low concentration range at which it can be discharged to sewerage, etc., and it is also possible to decompose particularly hardly decomposable substances by oxidation such as organic substances in environmental water or nitrogen or phosphorus compounds, etc.

### Disclosure of Invention

Under such circumstances, the present inventors have conducted extensive studies to solve the above problems, and found that by combining a treatment of irradiating ultrasonic waves and a treatment of irradiating ultraviolet rays, not only the decomposition speed of organic halogen compounds, etc. can be improved, but also the nitrogen or phosphorus compounds, etc. which are hardly decomposable in the prior art can be decomposed. They have accomplished the present invention based on this discovery.

Namely, one aspect of a method for decomposing environmental pollutants of the present invention is a method for decomposing environmental pollutants, which comprises introducing a solution to be treated containing environmental pollutants into a reaction vessel, and irradiating the solution to be treated stored in the reaction vessel with ultrasonic waves and ultraviolet rays, wherein the reaction vessel is provided with an ultrasonic waves-irradiating means to irradiate ultrasonic waves and an ultraviolet rays-irradiating means at a position where it does not substantially interfere with a path of travel of ultrasonic waves to irradiate ultraviolet rays towards the solution to be treated, stored in the path of travel of the ultrasonic waves.

According to the above method, by irradiating the solution to be treated with ultrasonic waves and ultraviolet rays at the same time to conduct a mixed treatment of irradiation of ultrasonic waves and irradiation of ultraviolet rays, hydrogen peroxide formed by irradiation of ultrasonic waves is irradiated with ultraviolet rays to generate OH radicals showing a high activity and a low selectivity, and it is therefore possible, for example, to simply and efficiently, without using a reagent, the polluted water containing volatile substances such as organic halogen compounds from a high concentration level to a low concentration range which is an environmentally dischargeable standard level, by which the polluted water can be discharged into public sewerage or used as recycled water.

Further, it is also possible to decompose substances hardly decomposable by conventional oxidation among the organic substances and nitrogen or phosphorus compounds in environmental water, by the high oxidation power of OH radicals.

Furthermore, since the ultraviolet rays-irradiating means is provided at a position where it does not substantially interfere with a path of travel of ultrasonic waves, the travel of ultrasonic waves is not prevented by the ultraviolet rays-irradiating means, whereby the decomposition treatment can be carried out while suppressing the attenuation of ultrasonic waves and efficiently irradiating it.

Another aspect of a method for decomposing environmental pollutants of the present invention is a method for decomposing environmental pollutants, which comprises introducing a solution to be treated containing environmental pollutants into a reaction vessel, and irradiating the solution to be treated stored in the reaction vessel with ultrasonic waves and ultraviolet rays, wherein the solution to be treated is introduced into a first reaction vessel and irradiated with ultrasonic waves, and then the solution treated with ultrasonic waves is introduced into a second reaction vessel and irradiated with ultraviolet rays.

According to the above method, by irradiating the aqueous solution containing pollutants with ultrasonic waves, hydrogen peroxide is firstly formed in the liquid phase, and by subsequently irradiating with ultraviolet rays, OH radicals are generated from hydrogen peroxide, whereby it becomes possible to decompose volatile substances existing in a low concentration or substances hardly decomposable by oxidation in the liquid phase.

In a preferred embodiment of the method for decomposing environmental pollutants the present invention, the environmental pollutants are an organic halogen compounds. Organic halogen compounds of a low molecular weight such as tetrachloroethylene are volatile, and thus easily decomposable by irradiation of ultrasonic waves and the present invention is particularly suitably applicable thereto.

Further, in another preferred embodiment of the method for decomposing environmental pollutants of the present invention, the solution to be treated is a waste liquor of dry cleaning. The waste liquor of dry cleaning contains volatile organic halogen compounds such as tetrachloroethylene, and thus is easily decomposable by irradiation of ultrasonic waves and the method of the present invention can be suitably applied thereto.

In further preferred embodiment of the method for decomposing environmental pollutants of the present invention, the irradiation of ultrasonic waves and the irradiation of ultraviolet rays are carried out simultaneously or alternately, and repeated in plural cycles.

By carrying out the irradiations in plural cycles, it becomes possible to conduct a continuous treatment while flowing the solution to be treated and a treatment suitable for the aimed concentration of the finally treated water. Further, by using easily available ultrasonic waves-irradiating means and ultraviolet rays-irradiating means of from a small size to a medium size, and by providing plural sets thereof, it becomes possible to construct a device having a high treatment performance and make the fabrication easy and the costs low. Namely, by constructing them in a cascade connection system, or using a large size reaction vessel having plural sets of the irradiating means to form a multi-stage structure, it becomes possible to scale up the treating capacity or make a continuous treatment easily at low costs.

Further, in another preferred embodiment of the method for decomposing environmental pollutants of the present invention, the irradiation of ultrasonic waves and/or the irradiation of ultraviolet rays is carried out in a state that pH of the solution to be treated is adjusted to be 2 to 6. According to this method, the oxidative power of OH radicals in the solution to be treated can be increased, and thus the decomposition treatment can be made efficiently.

In further preferred embodiment of the method for decomposing environmental pollutants of the present invention, the irradiation of ultrasonic waves and/or the irradiation of ultraviolet rays is carried out after hydrogen peroxide is added to the solution to be treated or while adding hydrogen peroxide to the solution to be treated. According to this method, since the added hydrogen peroxide is decomposed by ultraviolet rays to generate OH radicals, a large amount of OH radicals are present even at the initial stage of decomposition, whereby the decomposition treatment can be carried out efficiently.

Moreover, in further preferred embodiment of the method for decomposing environmental pollutants of the present invention, the irradiation of ultrasonic waves and/or the irradiation of ultraviolet rays is carried out while maintaining the temperature of the solution to be treated at a level of 40 to 60□. According to this method, the vapor pressure of the volatile environmental pollutants in the solution to be treated becomes high, and thus the number of molecules of environmental pollutants transferred to the cavitation bubbles is increased and also unwanted boiling does not occur. Accordingly, the decomposition speed is increased and the treatment can be carried out efficiently.

Further, in further preferred embodiment of the method for decomposing environmental pollutants of the present invention, by intermittently irradiating the ultrasonic waves and/or ultraviolet rays, the temperature of the solution to be treated is maintained at a level of 40 to 60□. According to this method, there is no need to newly provide a temperature-controlling means and the temperature can be controlled only by an electrical on/off operation, whereby the temperature of the solution to be treated can be maintained simply and easily at low costs.

Further, in further preferred embodiment of the method for decomposing environmental pollutants of the present invention, a reflective face is formed on a peripheral wall of the reaction vessel to which the ultraviolet rays-irradiating means is provided, by which the irradiated ultraviolet rays are hardly leaked outside the reaction vessel. According to this method, it is possible to irradiate the ultraviolet rays throughout the inside of the reaction vessel by utilizing the reflective face, whereby generation of OH radicals in the solution to be treated is accelerated and the decomposition treatment can be carried out efficiently.

On the other hand, another aspect of the present invention is a device for decomposing environmental pollutants, which comprises a reaction vessel for storing a solution to be treated containing environmental pollutants, an ultrasonic waves-irradiating means for irradiating the solution to be treated in the reaction vessel with ultrasonic waves, and an ultraviolet rays-irradiating means for irradiating the solution to be treated in the reaction vessel with ultraviolet rays, wherein the ultraviolet rays-irradiating means is disposed at a position where it does not substantially interfere with a path of travel of ultrasonic waves irradiated by the ultrasonic waves- irradiating means and irradiates ultraviolet rays towards the solution to be treated, stored in the path of travel of the ultrasonic waves.

By using this device, it becomes possible to treat the environmental pollutants with the irradiation of ultrasonic waves and the irradiation of ultraviolet rays in combination. Accordingly, similarly as above, it is therefore possible, for example, to simply and efficiently, without using a reagent, decompose a contaminated water containing volatile substances such as organic halogen compounds from a high concentration level to a low concentration level which is an environmentally dischargeable standard level, by which the contaminated water can be discharged into public sewerage or used as recycled water at an industrial scale.

Further, the ultraviolet rays-irradiating means is disposed at a position where it does not substantially interfere with a path of travel of ultrasonic waves and irradiates ultraviolet rays towards the solution to be treated, whereby upon simultaneous irradiation of the ultraviolet rays and ultrasonic waves, the ultraviolet rays-irradiating means does not interfere with the travel of ultrasonic waves, treatment efficiency of the device can be improved and the decomposition treatment can be made to a low concentration in a short time.

In a preferred embodiment of the device for decomposing environmental pollutants, the ultraviolet rays-irradiating means is disposed at a circumference of the path of travel of the ultrasonic waves. According to this embodiment, upon simultaneous irradiation of the ultrasonic waves and ultraviolet rays, the ultraviolet rays-irradiating means does not interfere with the travel of ultrasonic waves, whereby the decomposition treatment can be made with good efficiency.

Further, in another preferred embodiment, the ultraviolet rays-irradiating means is disposed in the reaction vessel along the path of travel of ultrasonic waves, and the ultrasonic waves-irradiating means is installed on the reaction vessel at a position such that the ultrasonic waves travel along the circumference of the ultraviolet rays-irradiating means. By this embodiment, similarly as above, upon simultaneous irradiation of the ultrasonic waves and ultraviolet rays, the ultraviolet rays-irradiating means does not interfere with the travel of ultrasonic waves, the decomposition treatment can be made with good efficiency.

Moreover, in further preferred embodiment, the ultrasonic waves-irradiating means and ultraviolet rays-irradiating means are disposed such that the ultrasonic waves irradiated by the ultrasonic waves-irradiating means travel along the surface of the ultraviolet rays-irradiating means. According to this embodiment, when the treatment is carried out while immersing the ultraviolet rays-irradiating means in the solution to be treated, ultrasonic waves prevent stains from adhering to an ultraviolet lamp, etc., whereby reduction of ultraviolet ray transmittance can be prevented.

Another aspect of a device for decomposing environmental pollutants of the present invention comprises a reaction vessel in which a solution to be treated containing environmental pollutants, a means for irradiating ultrasonic waves to the solution to be treated in the reaction vessel, and a means for irradiating ultraviolet waves to the solution to be treated in the reaction vessel, wherein the reaction vessel comprises a first reaction vessel for storing the solution to be treated and a second reaction vessel for storing the solution to be treated flowing out of the first reaction vessel, the first reaction vessel is provided with an ultrasonic waves-irradiating means for irradiating ultrasonic waves to the solution to be treated, and the second reaction vessel is provided with an ultraviolet rays-irradiating means for irradiating ultraviolet rays to the solution treated with ultrasonic waves.

In this device, since the reaction vessel is separated into the first reaction vessel and the second reaction vessel, the ultraviolet rays-irradiating means does not interfere with the path of travel of ultrasonic waves. Accordingly, ultrasonic waves can be irradiated efficiently, and thus the decomposition treatment performance of the device can be improves.

In the device for decomposing environmental pollutants of the present invention, it is preferred to dispose a means for adding a pH-adjusting agent to adjust the pH of the solution to be treated to 2 to 6. By this embodiment, the irradiation of ultraviolet rays and/or the irradiation of ultrasonic waves can be made in a state that the pH of the solution to be treated is adjusted to an optimum range, for example, pH 2 to 6, and the oxidative power of OH radicals in the solution to be treated is enhanced, whereby the decomposition treatment can be made efficiently.

Further, it is preferred to dispose a hydrogen peroxide-adding means to add hydrogen peroxide to the solution to be treated. By this embodiment, as mentioned above, the irradiation of ultrasonic waves and/or the irradiation of ultraviolet rays can be made after adding or while adding hydrogen peroxide to the solution to be treated, whereby the added hydrogen peroxide is decomposed with ultraviolet rays to generate OH radicals, and thus a large amount of OH radicals are present even at the initial stage of decomposition and the decomposition treatment can be made efficiently.

Furthermore, it is preferred to dispose a temperature-controlling means to maintain the temperature of the solution to be treated at a level of 40 to 60°C. By this embodiment, as mentioned above, the decomposition speed is increased and the treatment can be made efficiently.

Further, as one embodiment of the temperature-controlling means, an irradiation-controlling means to maintain the temperature of the solution to be treated at a level of 40 to 60°C by intermittently irradiating the ultrasonic waves and/or ultraviolet rays, may preferably be mentioned. By this embodiment, temperature control can be made only by controlling the irradiation of ultrasonic waves and/or ultraviolet rays without disposing a heating or cooling means, whereby costs of the device can be reduced.

Furthermore, it is preferred to form a reflective face on a peripheral wall of the reaction vessel to which the ultraviolet rays-irradiating means is disposed. By this embodiment, ultraviolet rays irradiated from the ultraviolet rays-irradiating means is reflected by the reflective face, and irradiated over the solution to be treated efficiently, whereby the decomposition efficiency can be improved.

Further, it is preferred to dispose plural stages of the combination of the ultrasonic waves-irradiating means and ultraviolet rays-irradiating means. By this embodiment, the irradiation of ultrasonic waves and the irradiation of ultraviolet rays can be made repeatedly in plural times, whereby the solution to be treated can be treated to the desired level.

Moreover, it is preferred to employ the present invention for treatment of a solution to be treated containing organic halogen compounds as the environmental pollutants. By this embodiment, organic halogen compounds can be treated by decomposition efficiently.

Furthermore, it is preferred to employ the present invention for treatment of waste liquor of dry cleaning. By this embodiment, it becomes possible to efficiently decomposing and treating the waste liquor of dry cleaning containing a large amount of organic halogen compounds.

### Brief Description of the Drawings

- Fig. 1: is a schematic constructive view showing an embodiment of a device for decomposing environmental pollutants of the present invention; and (a) is a plan view, and (b) is a cross-sectional view taken along the A-A' line of (a).
- Fig.2: is a schematic constructive view showing another embodiment of the device for decomposing environmental pollutants of the present invention; and (a) is a plan view, and (b) is a cross-sectional view taken along the B-B' line of (a).
- Fig.3: is a schematic constructive view showing still another embodiment of the device for decomposing environmental pollutants of the present invention; and (a) is a plan view, and (b) is a cross-sectional view taken along the C-C' line of (a).
- Fig.4: is a schematic constructive view showing further embodiment of the device for decomposing environmental pollutants of the present invention; and (a) is a plan view, and (b) is a cross-sectional view taken along the D-D' line of (a).
- Fig.5: is a schematic constructive view showing still further embodiment of the device for decomposing environmental pollutants of the present invention; and (a) is a plan view, and (b) is a cross-sectional view taken along the E-E' line of (a).
- Fig.6: is a schematic constructive view showing another embodiment of the device for decomposing environmental pollutants of the present invention; and (a) is a plan view, and (b) is a cross-sectional view taken along the F-F' line of (a).
- Fig.7: is a schematic constructive view showing still another embodiment of the device for decomposing environmental pollutants of the present invention.
- Fig.8: is a schematic constructive view showing further embodiment of the device for decomposing environmental pollutants of the present invention.
- Fig.9: is a schematic constructive view showing still further embodiment of the device for decomposing environmental pollutants of the present invention.
- Fig.10: is a schematic constructive view showing another embodiment of the device for decomposing environmental pollutants of the present invention.
- Fig. 11: is a schematic constructive view showing still another embodiment of the device for decomposing environmental pollutants of the present invention; and (a) is a plan view, and (b) is a cross-sectional view taken along the G-G' line of (a).
- Fig.12: is a schematic constructive view showing further embodiment of the device for decomposing environmental pollutants of the present invention; and (a) is a plan view, and (b) is a cross-sectional view taken along the H-H' line of (a).
- Fig.13: is a schematic constructive view showing still further embodiment of the device for decomposing environmental pollutants of the present invention; and (a) is a plan view, and (b) is a cross-sectional view taken along the I-I' line of (a).
- Fig.14: is a schematic constructive view showing another embodiment of the device for decomposing environmental pollutants of the present invention; and (a) is a plan view, and (b) is a cross-sectional view taken along the J-J' line of (a).
- Fig. 15: is a schematic constructive view showing still another embodiment of the device for decomposing environmental pollutants of the present invention.
- Fig.16: is a schematic constructive view showing further embodiment of the device for decomposing environmental pollutants of the present invention.
- Fig.17: is a schematic constructive view showing still further embodiment of the device for decomposing environmental pollutants of the present invention.
- Fig.18: is a schematic constructive view showing another embodiment of the device for decomposing environmental pollutants of the present invention.
- Fig.19: is a schematic constructive view showing still another embodiment of the device for decomposing environmental pollutants of the present invention.
- Fig.20: is a view showing an example of temperature control by intermittent irradiation of ultrasonic waves and ultraviolet rays in Fig. 19.
- Fig.21: is a graph showing the relation between a treatment time and a residual tetrachloroethylene concentration in Example 1 of the present invention and Comparative Examples 1 and 2.
- Fig.22: is a graph showing the relation between a treatment time and a nitrogen decomposition rate in Example 2 of the present invention and Comparative Examples 3 and 4.
- Fig.23: is a graph showing the relation between a treatment time and a residual tetrachloroethylene concentration in Examples 3 and 4 of the present invention and Comparative Examples 5 and 6.
- Fig.24: is a graph showing the relation between a treatment time and a residual tetrachloroethylene concentration in Example 5 of the present invention and Comparative Example 7.
- Fig.25: is a graph showing the relation between a treatment time and a residual tetrachloroethylene concentration in Examples 6 and 7 of the present invention and Comparative Examples 8 to 11.

### Mode for Carrying out the Invention

Hereinafter, embodiments of the present invention will be described with reference to drawings. However, it should be mentioned that the present invention is be no means restricted to the following embodiments.

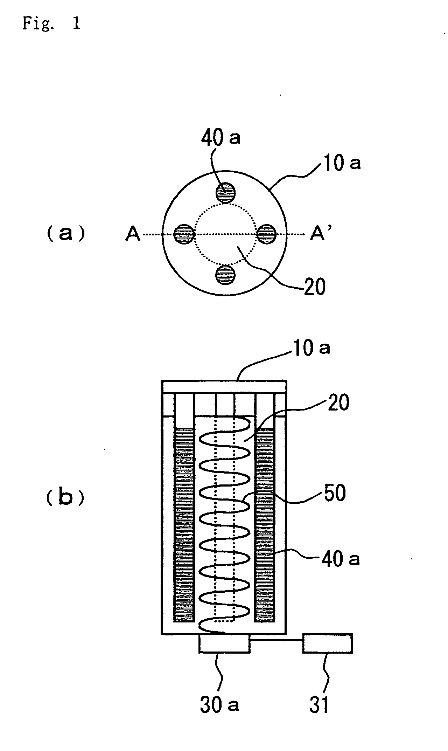

Fig.1 shows an embodiment of the device for decomposing environmental pollutants of the present invention.

In the decomposition device as shown in Fig. 1, a solution to be treated 20 which is an aqueous solution containing environmental pollutants is placed in a reaction vessel 10a. Here, the inside of the reaction vessel 10a is mostly filled with the solution to be treated 20, and is a closed system shut out from the air. Further, an ultrasonic transducer 30a of a disc shape is disposed at the central bottom portion of the reaction vessel 10a and connected to a transmitter 31. A plurality of rod-shaped ultraviolet lamps 40a are disposed around the transducer 30a so that the lamps surround the transducer, in the solution to be treated 20. As shown in
Fig.1(a), four ultraviolet lamps are disposed in this embodiment.

As the material of the reaction vessel 10, a metal, glass, plastics, etc. may appropriately be selected. It is preferred that the material does not leak the ultraviolet rays outside the reaction vessel 10. Further, the reaction vessel may be devised so that the ultraviolet rays will not leak outside. And, since the ultrasonic waves are irradiated from the outside of the reaction vessel 10, the reaction vessel should preferably have a material and a thickness not preventing the travel of ultrasonic waves.

As the ultraviolet rays-irradiating means, various conventionally known means may be used, but it is preferred to use an ultraviolet lamp from the viewpoints of strength, costs, stability, etc. In this embodiment, a cylindrical ultraviolet lamp 40a is installed downwardly in a vertical direction so that it can be easily replaced when its lifetime ends. In one ultraviolet lamp, ultraviolet rays are irradiated in a radial direction within a range from the vicinity of water surface to the vicinity of the bottom in a vessel. Accordingly, when the effective range of ultrasonic waves is a central columnar shape of a vessel as shown in Fig.1 (a), it is preferred that at least two ultraviolet lamps are installed with a constant interval concentrically so that these surround the column. Further, the ultraviolet lamp 40a is preferably installed at a position where ultraviolet rays are ultimately irradiated in the effective range of ultrasonic waves, so that it will not interfere with the travel of ultrasonic waves and taking into consideration the overlap with the ultraviolet rays irradiated from respective ultraviolet lamps 40a.

As the ultrasonic waves-irradiating means, conventionally known ultrasonic apparatuses or the like using piezoelectric effect of crystals may be used, but there is no particular limitation. Further, the transducer 30a may be disposed outside the bottom portion of the reaction vessel 10a as shown in Fig.1 (b) or at the bottom portion inside the reaction vessel 10a.

Then, the operation of this embodiment will be described.

The reaction vessel 10a is filled with the solution to be treated 20 and irradiation by the ultraviolet lamp 40a is started, and at the same time, the transmitter 31 of ultrasonic waves is operated to start irradiation of ultrasonic waves by the transducer 30a. From the ultraviolet lamp 40a, ultraviolet rays not shown in the drawing are irradiated inwardly in a radial direction of the reaction vessel. On the other hand, ultraviolet rays 50 are irradiated in an axial direction (vertical direction) of the reaction vessel 10a from the transducer 30a as indicated by the imaginary line of Fig.1 (b).

In this instance, by the irradiation of ultrasonic waves, instantaneous adiabatic compression of cavitation bubbles occurs as mentioned above, which brings about a high temperature/high pressure condition at a level of a few thousands □ and a few thousands atoms. Accordingly, organic halogen compounds, etc. are thermally decomposed at the time of compression of bubbles and converted to harmless carbon dioxide gas and halogen ions. Further, together with the formation of cavitation bubbles, in its vicinity, thermal decomposition of water molecules generates OH radicals, and oxidative decomposition is also caused by the OH radicals. However, on the contrary, formation of hydrogen peroxide also proceeds by the recombination of the OH radicals.

On the other hand, by the irradiation of ultraviolet rays from the ultraviolet lamp 40a, the hydrogen peroxide formed in a liquid phase of the solution to be treated 20 is decomposed again into OH radicals. Here, the OH radicals are newly generated in the liquid phase, not at the interface of cavitation bubbles. Accordingly, by the high oxidative power of the OH radicals, it becomes possible to improve the decomposition speed at a low concentration range of volatile substances in the waste liquor, and decompose substances hardly decomposed by oxidation among organic substances, nitrogen or phosphorus compounds, etc. in environmental water.

In the present invention, the irradiation intensity of ultraviolet rays and the frequency of ultrasonic waves may appropriately be selected depending upon the type, amount, initial concentration, aimed finally decomposed concentration, etc. of the solution to be treated, and not particularly limited. However, the ultraviolet rays may preferably have a wavelength of around 260 nm and an irradiation intensity of 0.1 to 1,000 mW/cm², and the ultrasonic waves may preferably have an irradiation frequency of 100 kHz to 1 MHz in order to enhance the reactivity by cavitation effect.

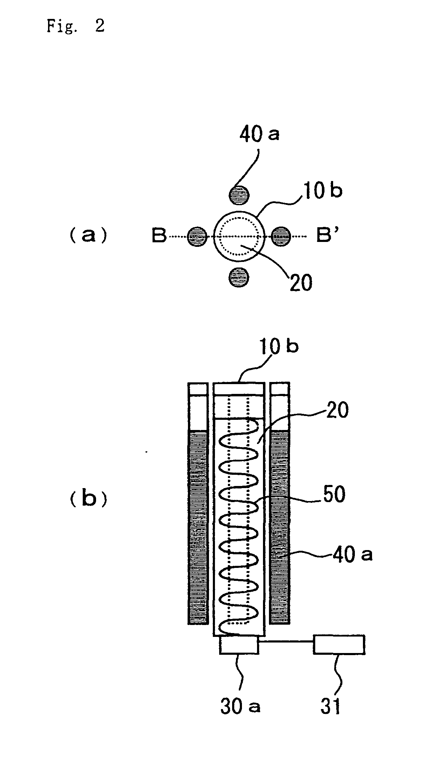

Fig.2 shows another embodiment of the device for decomposing environmental pollutants of the present invention. in the explanation of the embodiments hereinbelow, substantially same parts as the ones in the above embodiment will be indicated by the same symbols, and their explanations will be omitted.

As shown in Fig.2, this decomposition device is different from the above in that an ultraviolet lamp 40a is disposed outside a reaction vessel 10b. In this instance, it is preferred that the reaction vessel 10b is made of a material through which ultraviolet rays may be transmitted inwardly, such as quartz glass.

According to this embodiment, replacement or the like of the ultraviolet lamp 40a can simply be made and its maintenance is easy, and safety can be improved since the ultraviolet lamp 40a is not directly immersed in the solution to be treated 20.

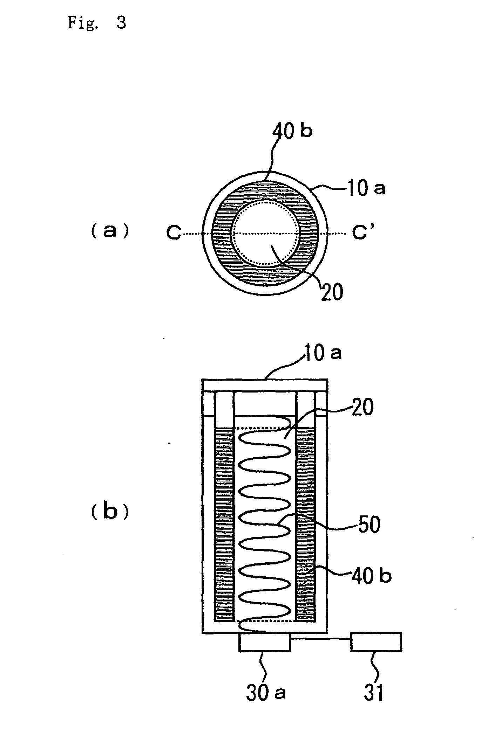

Fig.3 shows still another embodiment of the device for decomposing environmental pollutants of the present invention. This embodiment is different from the first embodiment of Fig.1 in that an ultraviolet lamp 40b has a cylindrical shape and is disposed downwardly in a vertical direction so that it surrounds the central portion of columnar shape of the container which is an effective range of ultrasonic waves.

In this structure, ultraviolet rays can be irradiated at an optimum level throughout the entire surface of the effective range of ultrasonic waves, and it is thus unnecessary to determine the number and position of ultraviolet lamp 40a taking into consideration the overlap of ultraviolet rays irradiated as in the embodiment of Fig.1, whereby the decomposition efficiency of the environmental pollutants can further be improved.

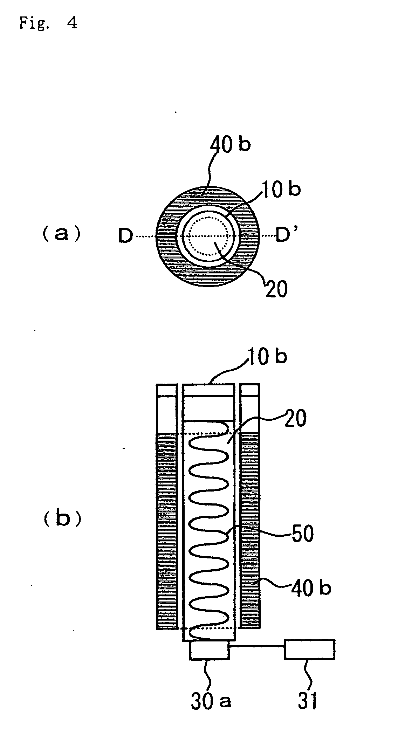

Fig.4 shows further embodiment of the device for decomposing environmental pollutants of the present invention. This embodiment is different from the embodiment of Fig.3 only in that an ultraviolet lamp 40b is disposed outside the reaction vessel 10b like in Fig.2.

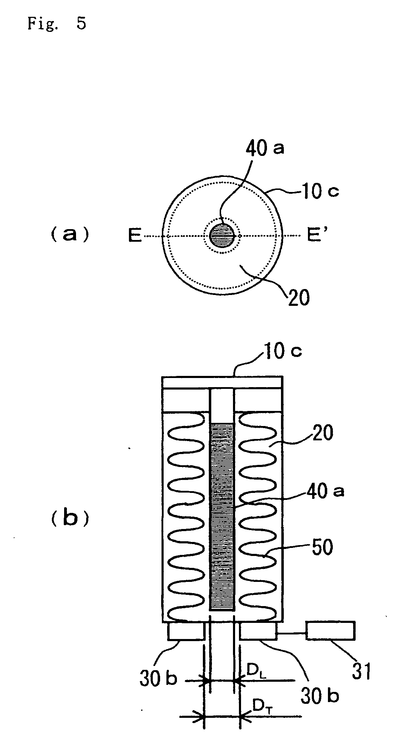

Fig.5 shows still further embodiment of the device for decomposing environmental pollutants of the present invention. This embodiment is different from the first embodiment in that the positions of the ultrasonic waves-irradiating part and the ultraviolet rays-irradiating part are reversed. By this structure, a transducer 30b of ultrasonic waves 50 has a ring-like shape, and disposed at the bottom portion of a reaction vessel 10c of a cylindrical shape. Further, an ultraviolet lamp 40a of a cylindrical shape is installed downwardly in a vertical direction at the center of the reaction vessel 10c.

Here, in this embodiment, the relation between the ring inner diameter D_{T} of the transducer 30b and the tube diameter D_{L} of the ultraviolet lamp 40 is D_{T} ≥ D_{L}, and it is preferred that D_{T} = D_{L} or D_{T} is a little larger than D_{L} in order that the ultrasonic waves will not be interfered. In this structure, ultraviolet rays will be irradiated at a maximum level over the effective range of ultrasonic waves, and thus it becomes possible to conduct decomposition of environmental pollutants with good efficiency in a treatment wherein ultrasonic waves and ultraviolet rays are irradiated simultaneously.

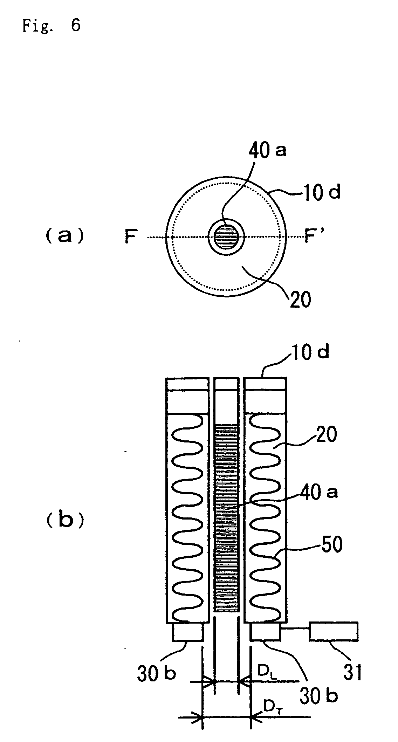

Fig. 6 shows another embodiment of the device for decomposing environmental pollutants of the present invention. This embodiment is different from the embodiment of Fig. 5 in that an ultraviolet lamp 40a is disposed inside a reaction vessel 10d so that the ultraviolet lamp 40a will not be directly immersed in the solution to be treated 20.

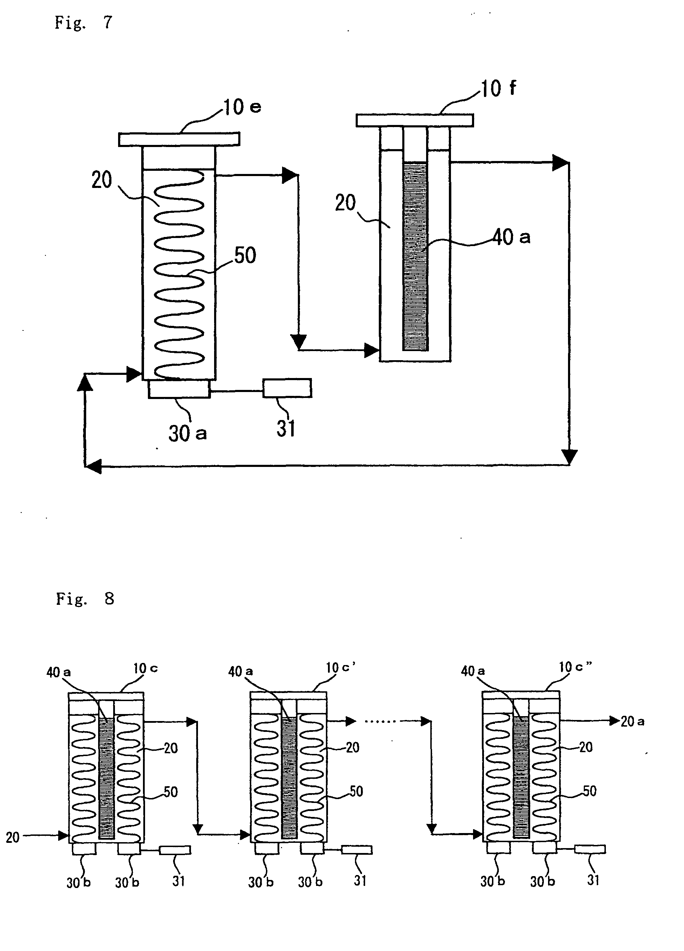

Fig.7 shows still another embodiment of the device for decomposing environmental pollutants of the present invention.

In this embodiment, the treatment by the irradiation of ultrasonic waves and the treatment by the irradiation of ultraviolet rays are separated into different steps, and after the treatment by the irradiation of ultrasonic waves of a constant period, the treatment by the irradiation of ultraviolet rays is conducted. Namely, this device is constituted by two types of reaction vessels of a reaction vessel 10e for the irradiation of ultrasonic waves and a reaction vessel 10f for subsequent irradiation of ultraviolet rays. At the central bottom portion of the reaction vessel 10e, a transducer 30a of a disc shape is disposed, and at the central portion of the reaction vessel 10f, a rod-shaped ultraviolet lamp 40a is disposed downwardly in a vertical direction.

By using the device of this embodiment, first, a solution to be treated 20 is injected into the reaction vessel 10e, and the irradiation of ultrasonic waves is conducted for a constant time by use of a timer, etc. not shown in the drawing. Here, first, volatile substances such as organic halogen compounds contained in the solution to be treated 20 are rapidly decomposed from a high concentration to a medium concentration range by the effect of the above-mentioned cavitation bubbles. However, at a low concentration range, the decomposition speed decreases, and instead, HO radicals are generated by thermal decomposition of vapor and, via recombination, hydrogen peroxide is formed. Further, when the solution to be treated 20 contains organic substances or nitrogen or phosphorus compounds, etc. in the environmental water, and particularly when it contains substances which are nonvolatile and hardly decomposable by oxidation, it is difficult to conduct direct decomposition only by the above-mentioned cavitation bubbles and formation of hydrogen peroxide by the thermal decomposition of vapor is mainly caused.

However, the solution to be treated 20 which is treated by the reaction vessel 10e and contains the formed hydrogen peroxide and unreacted substances, is then introduced into the reaction vessel 10f and treated by irradiation with the ultraviolet lamp 40a. By this embodiment, hydrogen peroxide is decomposed by ultraviolet rays and OH radicals are regenarated, and unreacted substances not decomposed by the reaction vessel 10e can be decomposed by oxidation in the reaction vessel 10f.

In this device, it is possible to introduce the solution to be treated from the reaction vessel 10e to the reaction vessel 10f, manually or automatically with a liquid-supplying pump, etc. Further, when the decomposition rate of the pollutants in the solution to be treated per one time is low, the solution can be circulated by connecting the reaction vessels 10e and 10f in a loop-like fashion as shown in Fig.7, and thus the treatment may be repeated until the desired decomposition rate is attained.

Fig.8 shows further embodiment of the device for decomposing environmental pollutants of the present invention.

In this embodiment, a plurality of devices of the embodiment of Fig.5 are connected in a cascade fashion. By this structure, a treatment by simultaneous irradiation of ultrasonic waves and ultraviolet rays is successively carried out in respective reaction vessels 10c, 10c', 10c" ... , whereby scale up of a treatment amount and a continuous treatment can be made in a short time, and the aimed decomposition rate in the final treated water 20a can be surely attained.

Here, as the structure of each reaction vessel, there is no particular limitation so long as combined treatment of irradiation of ultrasonic waves and irradiation of ultraviolet rays can be made. In this embodiment, every one of 10a to 10c of the above embodiments of the present invention is applicable, and there is no particular limitation. Further, the one obtained by combining the reaction vessels 10e and 10f of Fig.7 and assembling them in a cascade fashion.

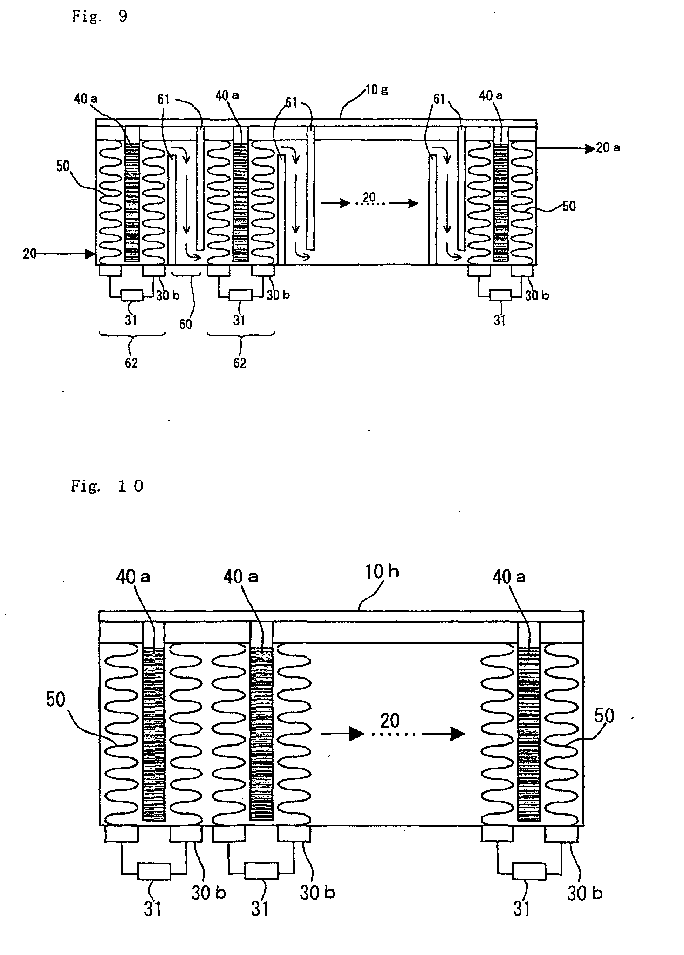

Fig.9 shows still further embodiment of the device for decomposing environmental pollutants of the present invention.

In this embodiment, plural sets of means for simultaneously irradiating ultrasonic waves and ultraviolet rays are disposed, and further means for controlling the flow direction of the solution to be treated are disposed between respective sets, by which it becomes possible to continuously treat the solution to be treated by the compressed flows.

Namely, this decomposition device has plural sections partitioned by plural partitions 61 in a reaction vessel 10. In some of these sections, an ultraviolet lamp 40a and an ultrasonic transducer 30b are installed to form an ultrasonic /ultraviolet treatment part 62. Between respective treatment parts 62, a flow-adjusting part 60 is formed which is surrounded by a partition wall 61 which extends from the bottom wall of a reaction vessel 10g to a part below the water surface and a partition wall 61 which extends from the upper part of the reaction vessel 10g to the vicinity of the bottom wall.

When the solution to be treated 20 is passed from a first ultrasonic/ultraviolet treatment part 62 of the reaction vessel 10g (lower left part in Fig.9), the solution to be treated 20 flows from the lower portion to the upper portion in the first ultrasonic/ultraviolet treatment part 62 of Fig.9, and forms a compressed flow from the upper portion to the lower portion by partition walls 61 in the flow-adjusting part 60, and by repeating this portion, it becomes possible to continuously treat the solution to be treated 20 and accomplish the aimed decomposition rate of the finally treated solution 20a. Further, by utilizing the compressed flow using the partition walls 61, the decomposition device can be made further compact.

Fig. 10 shows another embodiment of the device for decomposing environmental pollutants of the present invention.

The reaction vessel 10h of this embodiment comprises plurality sets of means for irradiating ultrasonic waves and ultraviolet rays simultaneously as in the previous embodiment, but is different from the embodiment of Fig.9 in that the means of controlling the direction of the flow of the solution to be treated is omitted.

Namely, in this embodiment, plural sets of ultrasonic/ultraviolet treatment parts 62 comprising ultraviolet lamp 40a and ultrasonic transducer 30b are provided in the reaction vessel 10h, but no partition wall is provided between the sets and the solution to be treated 20 passes in a transverse direction through respective ultrasonic/ultraviolet treatment parts 62 in this structure.

By this structure, it becomes possible to make the device further unified and compact, and conduct the treatment of the solution to be treated 20 in a large amount by the irradiation with ultrasonic waves and the irradiation with ultraviolet rays in combination. Here, unlike the reaction vessel 10g, partition walls 61 are not provided. Accordingly, the irradiation means should desirably be disposed apart from one another with a suitable distance so that among ultraviolet rays 50 in respective sets, adjacent ultrasonic waves do not interfere with traveling waves and reflected waves thereof.

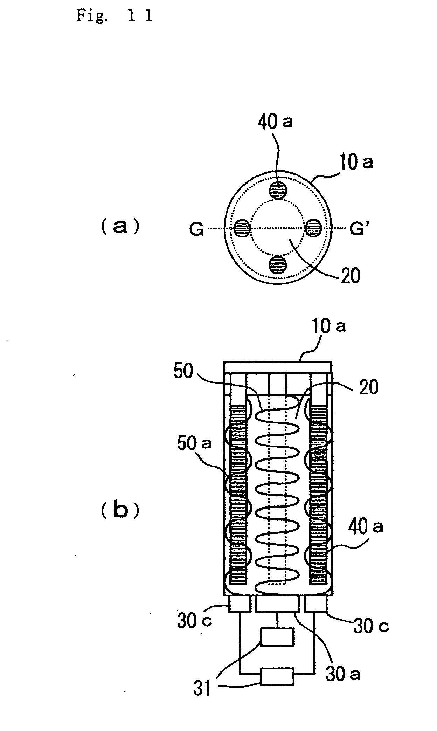

Figs.11 to 13 show other embodiments, different from one another, of the devices for decomposing environmental pollutants of the present invention.

In the decomposition device of Fig. 11, an ultrasonic transducer 30a for treating the solution to be treated 20 is disposed at the central portion at the bottom wall of the reaction vessel 10a, and four ultraviolet lamps 40a are disposed with a uniform interval at the periphery in the reaction vessel 10a. And, at the bottom wall of the reaction vessel 10a, an annular washing transducer 30c for washing the ultraviolet lamps 40a are disposed surrounding the ultrasonic transducer 30a.

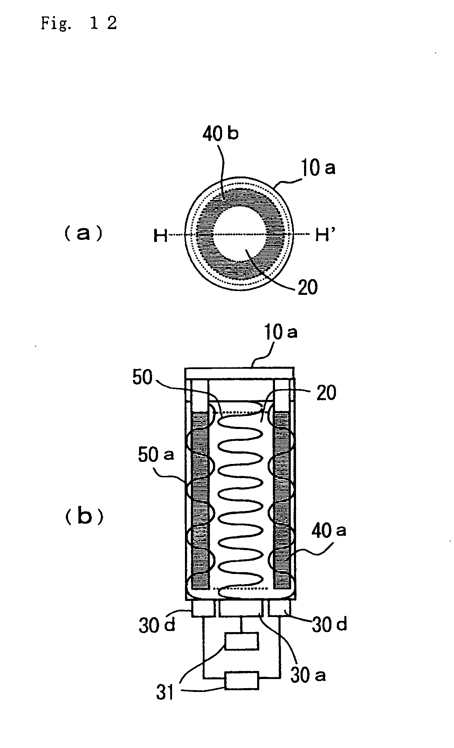

The decomposition device of Fig.12 is different from the decomposition device of Fig.11 in that a cylindrical ultraviolet lamp 40b is used instead of the rod-shaped ultraviolet lamps 40a. In this decomposition device also, an annular washing transducer 30d is disposed at the bottom wall of the reaction vessel 10a, beneath the ultraviolet lamp 40b.

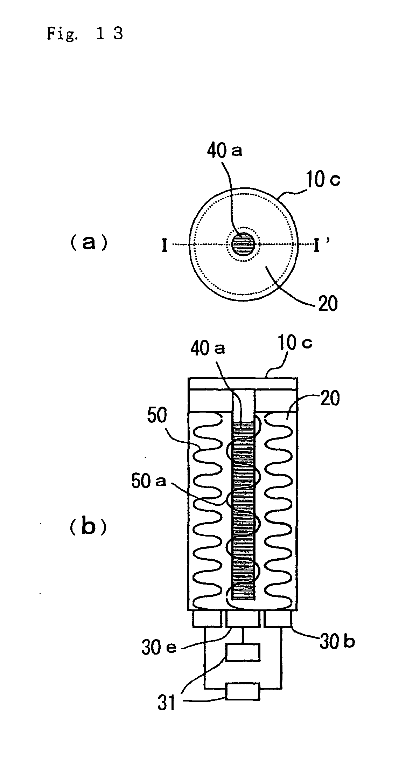

In the decomposition device of Fig.13, a rod-shaped ultraviolet lamp 40a is disposed at the central portion of a reaction vessel 10c, and ultrasonic transducers 30b are disposed in a circular shape at the peripheral edge at the bottom wall of a reaction vessel 10c. And, at the central portion of the bottom wall of the reaction vessel 10c, a disc-shaped washing transducer 30e for washing the ultraviolet lamp 40a is disposed.

In the decomposition devices of Figs.11 to 13, the washing transducers 30c, 30d or 30e is separately disposed at the bottom surface of the reaction vessel 10c and beneath the ultraviolet lamp 40, for the purpose of preventing the reduction of transmittance of ultraviolet rays by the coloring or the physical adhesion of contaminant such as particles contained in the solution to be treated 20 onto the lamp surface of the ultraviolet lamp 40a of the water-immersion type. Accordingly, oscillation of cavitation by the irradiation of ultrasonic waves 50a for washing, and oxidative decomposition and bleaching by hydrogen peroxide or OH radicals can be utilized, whereby no adherent of contaminant on the lamp surface is seen and it is possible to maintain stable treatment effects for a long period of time.

Here, the ultrasonic waves 50a have advantages that its wavelength becomes short as the frequency becomes high, and the reaction range formed by the increase of the cavitation bubbles increases. On the other hand, the ultrasonic waves 50a have disadvantages that the directivity and attenuation increase. Accordingly, the frequency of the ultrasonic waves for washing which will be irradiated on the ultraviolet lamp 40a is preferably a low frequency of 20 to 100 kHz. If the frequency is less than 20 kHz, the reaction range formed by the increase of the cavitation bubbles decreases, and thus the washing effect is not sufficient. Further, if it is higher than 100 kHz, by the high directivity and high attenuation, effective ultrasonic intensity is not obtainable at the lamp bottom portion of the ultraviolet lamp 40a and its vicinity, and sufficient washing effect may sometimes be not obtainable, such being unfavorable.

Further, as the timing of irradiating the ultrasonic waves for reaction and the ultrasonic waves for washing, the ultrasonic waves for reaction and the ultrasonic waves for washing may be always irradiated during the treatment depending upon the contamination of the solution to be treated 20, degree of coloration, or degree of adherent of contamination on the ultraviolet lamp 40a. Otherwise, the ultrasonic waves for washing may be irradiated after completion of treatment, for example, at the time of maintenance. Further, the ultrasonic waves for reaction and the ultrasonic waves for washing may be irradiated alternately during the treatment.

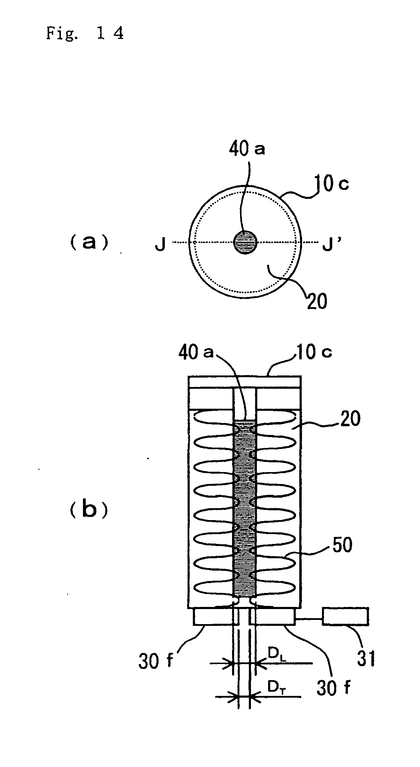

Fig.14 shows another embodiment of the device for decomposing environmental pollutants of the present invention.

This embodiment is different from the embodiment of Fig.5 in that the relation between the ring inner diameter D_{T} of the transducer 30f and the tube diameter D_{L} of the ultraviolet lamp 40a is D_{L} ≥ D_{T}. Namely, the irradiation ranges of ultrasonic waves are partly overlapping from the lamp surface of the ultraviolet lamp 40a towards the center of the lamp diameter.

The transducer 30f is thus used for common use by irradiating ultrasonic waves 50 while making a part of the ultrasonic waves for reaction in contact with the ultraviolet lamp 40a. By this structure, although the decomposition efficiency of reaction slightly decreases due to turbulence of ultrasonic waves, it is possible not only to conduct the decomposition treatment but also, at the same time, prevent the reduction of transmittance of ultraviolet rays due to coloring or physical attachment of contaminant such as particles contained in the solution to be treated 20 onto the lamp surface, whereby the structure of the device can be simplified. Here, although the difference between D_{L} and D_{T} can appropriately be set, the difference should preferably be smaller, particularly from 0 to 0.1 mm, from the viewpoint to suppress the reduction of decomposition efficiency of reaction due to turbulence of ultrasonic waves as small as possible.

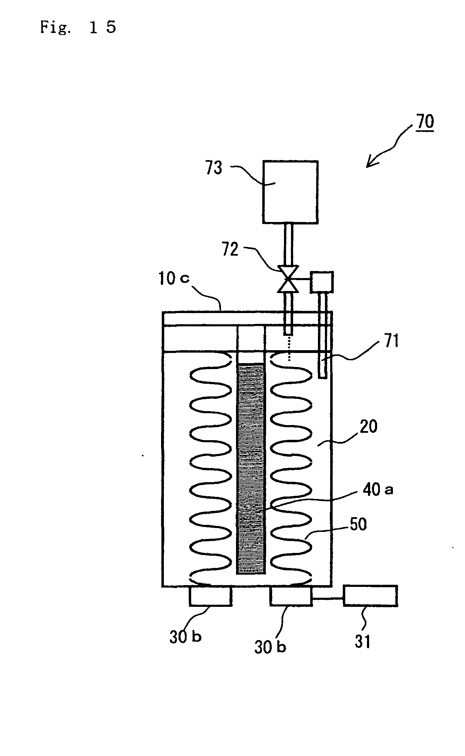

Fig.15 shows still another embodiment of the device for decomposing environmental pollutants of the present invention.

In this embodiment, the basic structure of the device is the same as that of the embodiment of Fig.5. A transducer 30b of ultrasonic waves 50 has a ring-like shape and is installed at the bottom portion of a reaction vessel 10c of a cylindrical shape. Further, an ultraviolet lamp 40a of a cylindrical shape is installed downwardly in a vertical direction at the center of the reaction vessel 10c. This embodiment is different from the embodiment of Fig.5 in that a means for adding a pH-adjusting agent 70 for adjusting the pH of the solution to be treated 20 is disposed.

The means for adding a pH-adjusting agent 70 is constituted by a pH sensor 71, a magnetic valve 72 and a liquid tank 73. In the liquid tank 73, an acid, an alkali, and a pH-controlling agent such as phosphate buffer solution, etc. are contained. In this embodiment, by opening or closing the magnetic valve 72 by controlling signals from the sensor 71, the pH-adjusting agent is injected in a necessary amount into the solution in the reaction vessel 10c depending upon the pH of the solution to be treated 20, whereby it becomes possible to conduct a constant pH adjustment.

In the present invention, it is preferred to conduct the irradiation of ultrasonic waves and/or the irradiation of ultraviolet rays under the condition that the pH of the solution to be treated 20 is adjusted to be 2 to 6, using the device as shown in Fig.15. Since the oxidative power of OH radicals generated by simultaneous irradiation of ultrasonic waves and ultraviolet rays is in the order of acidic > alkaline > neutral, the oxidative power of OH radicals in the solution to be treated is increased particularly in the acidic range, and the decomposition treatment can be carried out efficiently in this range. In this connection, the pH may be adjusted by separate manual operation without using the means for adding a pH-adjusting agent as shown in Fig.15.

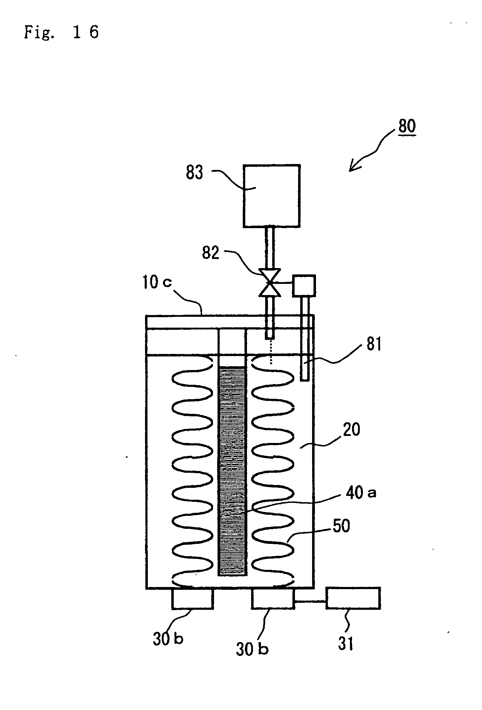

Fig. 16 shows further embodiment of the device for decomposing environmental pollutants of the present invention.

In this embodiment, the basic structure of the device is the same as the embodiment of Fig.15. However, it is different from the embodiment of Fig.15 in that a hydrogen peroxide-adding means 80 is disposed instead of the means for adding a pH-adjusting agent.

The hydrogen peroxide-adding means 80 is constituted by a hydrogen peroxide sensor 81, a magnetic valve 82 and a liquid tank 83. In the liquid tank 83, hydrogen peroxide is contained. In this embodiment, by opening or closing the magnetic valve 82 by controlling signals from the sensor 81, hydrogen peroxide is injected in a necessary amount into the solution in a reaction vessel 10c, whereby the hydrogen peroxide concentration can be controlled constantly.

By using the device as shown in Fig. 16, the irradiation of ultrasonic waves and/or the irradiation of ultraviolet rays can be carried out after addition or during addition of hydrogen peroxide to the solution to be treated 20.

Originally, since the amount of formed hydrogen peroxide at the initial stage of decomposition is small, the OH radical amount generated by irradiation of ultraviolet rays is small and at the initial stage of decomposition, the decomposition is mainly made of ultrasonic waves. However, according to this embodiment, by decomposing the added hydrogen peroxide with ultraviolet rays, OH radicals are separately generated, whereby the decomposition treatment can be efficiently conducted even at the initial stage.

The added amount of hydrogen peroxide is preferably such that the hydrogen peroxide will be 10 to 100 times to the molar concentration of the environmental pollutants in the solution to be treated 20. Further, in the present invention, hydrogen peroxide may be added by separate manual operation without using the hydrogen peroxide-adding means as shown in Fig. 16.

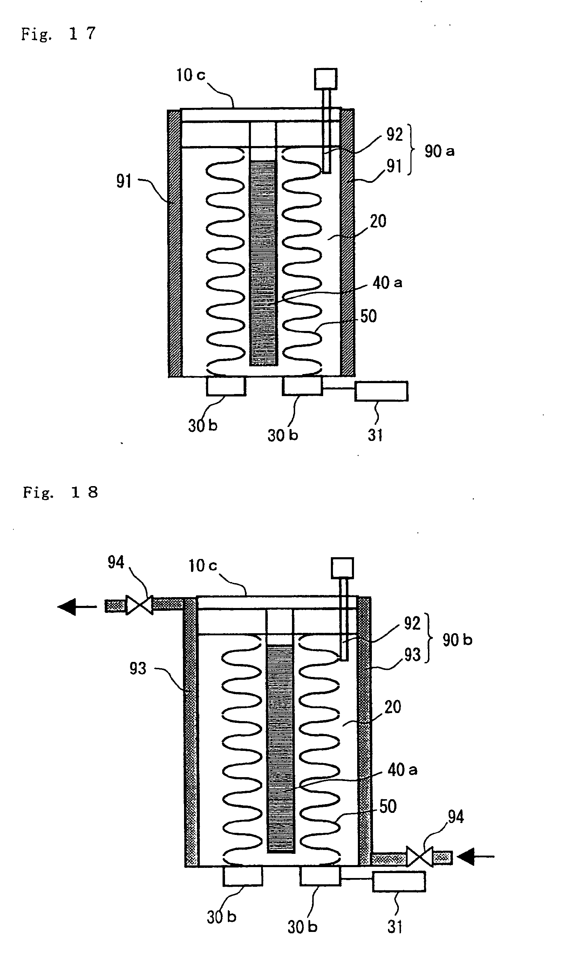

Fig.17 shows still further embodiment of the device for decomposing environmental pollutants of the present invention.

In this embodiment, the basic structure of the device is the same as that of the embodiment of Fig.5. However, it is different from the embodiment of Fig.5 in that a heater or a cooling apparatus 91 is disposed at the periphery of the reaction vessel 10c.

A temperature-controlling means 90a is constituted by a heater or a cooling apparatus 91, and a temperature sensor 92. As the heater or a cooling apparatus 91, conventionally known heating apparatus or cooling apparatus such as Peltier element may be used. By this structure, the heater or cooling apparatus 91 is ON/OFF controlled by the controlling signals from the temperature sensor 92 to maintain the temperature of the solution to be treated 20 so that it will be the previously set desired liquid temperature.

In the present invention, it is preferred to keep the temperature of the solution to be treated within a range of 40 to 60°C by using the device as shown in Fig. 17. If the temperature of the solution to be treated is less than 40°C, since the vapor pressure of the solution at the time of a low water temperature in the reaction mechanism with ultrasonic waves, the content of vaporization/transfer of molecules of environmental pollutants or vapor into cavitation bubbles, and as a result, the number of molecules thermally decomposed or decomposed by oxidation by OH radicals tends to decrease, such being unfavorable. Further, if the temperature exceeds 60°C, boiling phenomenon occurs and the reaction tends to be not uniform, and such a treatment is uneconomical in view of costs, such being unfavorable.

Further, when the initial temperature of the solution to be treated 20 is low, it is preferred to preliminarily heat the solution to be treated 20 until it reaches a range of 40 to 60°C and then start the irradiation of ultrasonic waves and ultraviolet rays.

Fig. 18 shows another embodiment of the device for decomposing environmental pollutants of the present invention.

In this embodiment, the basic structure of the device is the same as that of the embodiment of Fig.17. However, it is different from the embodiment of Fig.17 in that a temperature-controlling means 90b is constituted by a temperature sensor 92, a heating or cooling jacket 93 and a magnetic valve 94.

In this device, by opening and closing the magnetic valve 94, heating liquid or cooling liquid supplied from the outside is flowed in the direction indicated by the arrow into the heating or cooling jacket 93, heat exchange with the solution to be treated 20 is conducted to keep the temperature of the solution to be treated 20 at a level of 40 to 60°C. In this instance, normally, heated water of 40 to 60°C is passed, but if necessary, the temperature of the heating liquid or cooling liquid may be controlled by utilizing the controlling signals from the temperature sensor 92.

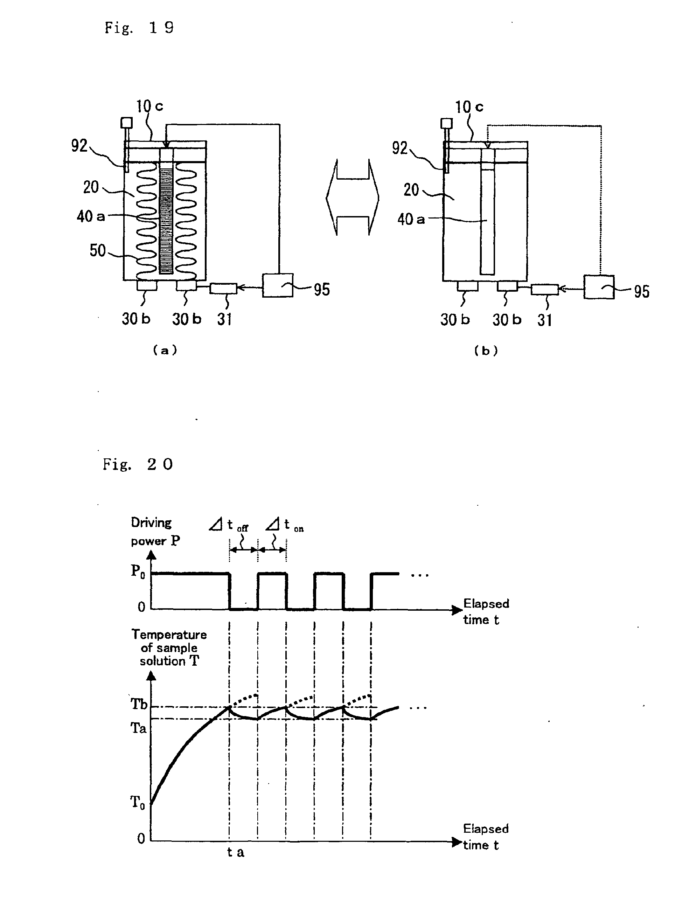

Fig. 19 shows still another embodiment of the device for decomposing environmental pollutants of the present invention.

In this embodiment, the basic structure of the device is the same as that of the embodiment of Fig.5. However, in this embodiment, as a temperature-controlling means for the solution to be treated 20, a temperature sensor 92 in a reaction vessel 10c and an ultrasonic /ultraviolet controlling circuit 95 by which ON/OFF of irradiations of ultrasonic waves and ultraviolet rays can be made are provided. And, the signals from the temperature sensor 92 are input into the ultrasonic /ultraviolet controlling circuit 95, ON/OFF of the supply of driving power to a transmitter 31 and driving power to an ultraviolet lamp 40a is intermittently made by the ultrasonic /ultraviolet controlling circuit 95 so that the temperature will be kept within a predetermined temperature range.

Fig.20 shows an example of temperature control by intermittent driving of ultrasonic waves and ultraviolet rays with the device of Fig.19. In Fig.20, Tb is the upper limit of the predetermined temperature range, Ta is the lower limit of the predetermined temperature range, and T₀ is the initial temperature before the treatment of the solution to be treated 20.

First, when the driving power P₀ is supplied upon the start of treatment, ultrasonic waves and ultraviolet rays are irradiated on the solution to be treated 20, and the temperature of the solution to be treated 20, detected by the temperature sensor 92, is raised from T₀ to T_{b}. Here, when the ultrasonic /ultraviolet controlling circuit 95 operates and makes the driving power to OFF state to terminate the irradiations of ultrasonic waves and ultraviolet rays, the temperature of the solution to be treated 20 gradually decreases. And, when it decreases to the temperature Ta, the driving power P₀ is again supplied, and ultrasonic waves and ultraviolet rays are irradiated on the solution to be treated. By repeating the intermittent irradiations of ultrasonic waves and ultraviolet rays as above, the temperature of the solution to be treated 20 can be maintained.

In this instance, driving power P₀, the time Δt on in which the driving power is supplied and the time Δt off in which the driving power is not supplied can be appropriately set depending upon the predetermined temperatures Ta, Tb. Further, the driving power P may not be always constant. For example, when the initial temperature T₀ of the solution to be treated 20 is low, the initial decomposition speed tends to be low. Accordingly, the driving power P may be made large until the temperature reaches the upper limit Tb of the predetermined temperature to shorten the time ta.

As mentioned above, by utilizing the heating effect by generation of Joule heat at the time of irradiations of ultrasonic waves and ultraviolet rays to the solution to be treated 20 and the heat radiation effect at the time of non-irradiation, it becomes possible to control the temperature at low cost without requiring special heating or cooling apparatus.

Hereinafter, the present invention will be described in further detail with reference to examples. However, it should be mentioned that the present invention is by no means restricted thereto.

### Example 1

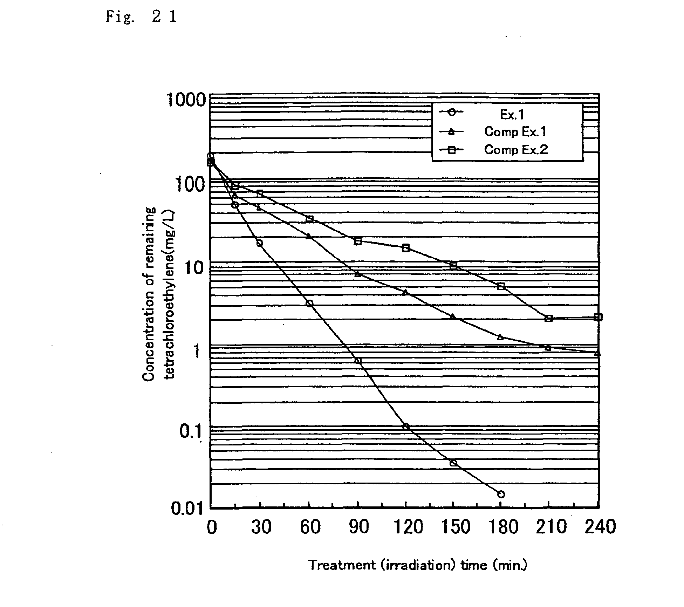

Using the decomposition device as shown in Fig.1 and, as a solution to be treated, 3 liters of a high concentration aqueous solution of 150 mg/liter of tetrachloroethylene as a type of volatile organic chlorine compounds, simultaneous irradiation with ultrasonic waves of 380 kHz, 200 W and ultraviolet rays having the maximum intensity of ultraviolet rays at a wavelength of around 260 nm was carried out, and variation with time of the concentration of the remaining tetrachloroethylene was measured. The results are indicated in Fig. 21.

### Comparative Example 1

The variation with time of the concentration of the remaining tetrachloroethylene was measured in the same manner as in Example 1 provided that only ultrasonic waves were irradiated and ultraviolet rays were not irradiated. The results are indicated in Fig. 21.

### Comparative Example 2

The variation with time of the concentration of the remaining tetrachloroethylene was measured in the same manner as in Example 1 provided that only ultraviolet rays were irradiated and ultrasonic waves were not irradiated. The results are indicated in Fig. 21.

From Fig.21, it is found that in Example 1 wherein ultrasonic waves and ultraviolet rays are simultaneously irradiated for treatment, even when the concentration of the remaining tetrachloroethylene decreases, the decomposition speed dose not substantially decrease, and it is possible to conduct the decomposition from the high concentration level of 150 mg/liter to the low concentration level of 0.1 mg/liter which is the quality standard of emission water to sewage in a short time of only 2 hours.

On the other hand, in Comparative Examples 1 and 2, the decomposition speed at the initial stage of irradiation of about 15 minutes was at the same level as in Example 1. However, the decomposition speed of the irradiation thereafter showed the tendency that the decomposition speed decreased as the concentration of the remaining tetrachloroethylene decreases, and even after 4 hours, it was impossible to decompose it to a low concentration level of 0.1 mg/liter which is the quality standard of emission water to sewage.

Further, when formation of hydrogen peroxide was separately measured, the formation of hydrogen peroxide was observed only when the treatment was carried out with irradiation of only ultrasonic waves at a low concentration range of the remaining tetrachloroethylene. It is thereby found that in the example, hydrogen peroxide formed by irradiation of ultrasonic waves generates OH radicals by irradiation of ultraviolet rays and is consumed for oxidative decomposition of a low concentration tetrachloroethylene in the liquid phase, whereby hydrogen peroxide is resultingly not detected at the time of simultaneous irradiation of ultrasonic waves and ultraviolet rays.

### Example 2

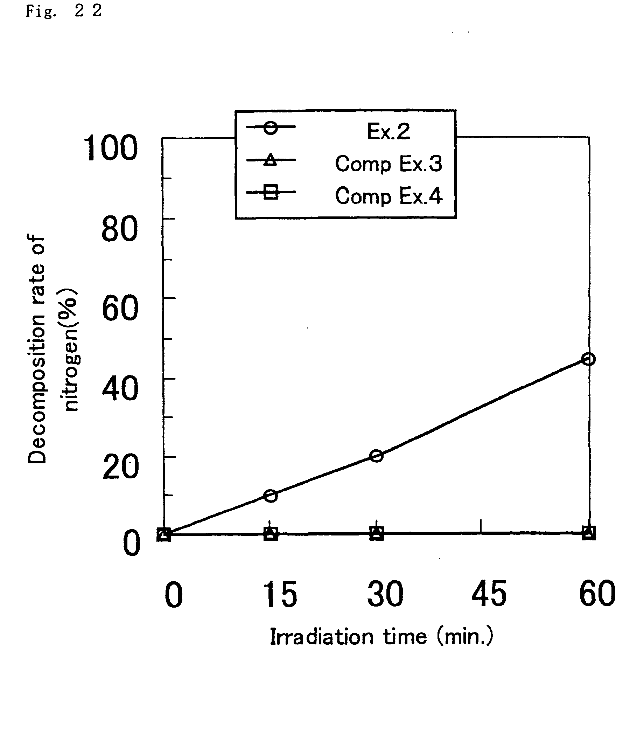

Using the decomposition device as shown in Fig.1 and, as the solution to be treated, 20 ml of a 1 mg nitrogen/liter (1 mgN/L) solution of an ammonium sulfate aqueous solution as a type of nitrogen compounds, simultaneous irradiation with ultrasonic waves of 200 kHz, 200 W and ultraviolet rays having the maximum intensity of ultraviolet rays at a wavelength of around 260 nm was carried out, and the variation with time of the ratio of formed nitrate ions as the decomposition product was measured. The results are indicated in Fig.22.

### Comparative Example 3

The variation with time of the ratio of formed nitrate ions as the decomposition product was measured under the same conditions as in Example 2 provided that only ultrasonic waves were irradiated and no ultraviolet rays were irradiated. The results are indicated in Fig.22.

### Comparative Example 4

The variation with time of the ratio of formed nitrate ions as the decomposition product was measured under the same conditions as in Example 2 provided that only ultraviolet rays were irradiated and no ultrasonic waves were irradiated. The results are indicated in Fig.22.

From Fig.22, it is found that in Example 2 wherein simultaneous irradiation of ultrasonic waves and ultraviolet rays was carried out for treatment, the decomposition speed increased with the lapse of treatment time and about 40% was decomposed in 1 hour. On the other hand, in Comparative Examples 3 and 4 wherein single irradiation was carried out for treatment, the decomposition rate after 1 hour was 0.5% or less and decomposition was hardly conducted. Accordingly, it is clearly understood that the present invention is effective to non-volatile and hardly decomposable substances, for example, substances hardly decomposed by normal oxidative decomposition among organic substances and nitrogen or phosphorus compounds.

### Example 3

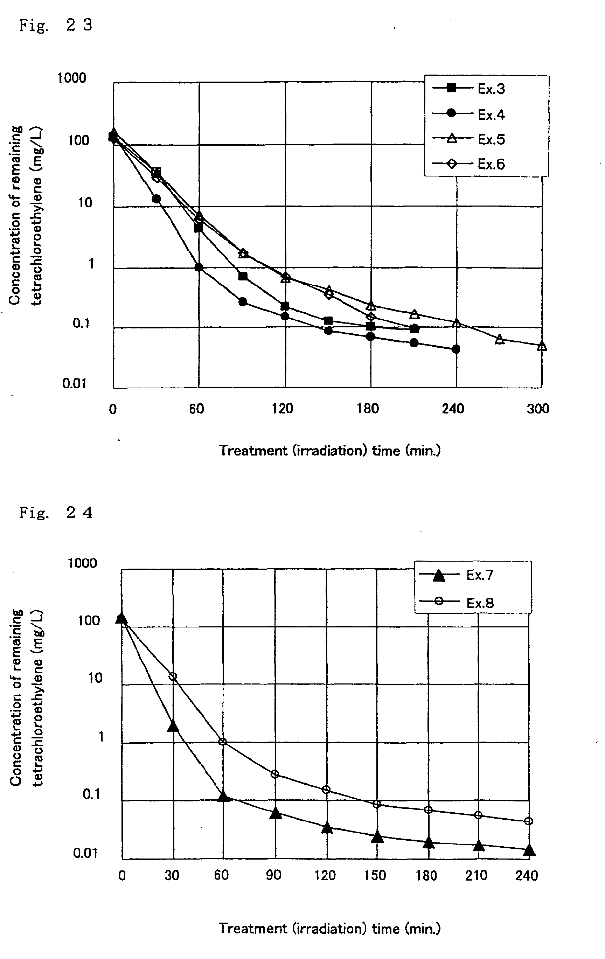

Using the decomposition device as shown in Fig.15 and, as the solution to be treated, 3 liters of a high concentration aqueous solution of 150 mg/liter of tetrachloroethylene as a type of volatile organic chlorine compounds, after the pH of the solution to be treated was adjusted to 5 by phosphate buffer solution, simultaneous irradiation of ultrasonic waves of 380 kHz, 200 W and ultraviolet rays having the maximum intensity of ultraviolet rays at a wavelength of around 260 nm was carried out for treatment, and the variation with time of the concentration of the remaining tetrachloroethylene was measured. The results are indicated in Fig.23.

### Example 4

The variation with time of the concentration of the remaining tetrachloroethylene was measured under the same conditions as in Example 3 provided that the pH was adjusted to 2. The results are indicated in Fig.23.

### Example 5

The variation with time of the concentration of the remaining tetrachloroethylene was measured under the same conditions as in Example 3 provided that the pH was adjusted to 7. The results are indicated in Fig.23.

### Example 6

The variation with time of the concentration of the remaining tetrachloroethylene was measured under the same conditions as in Example 3 provided that the pH was adjusted to 12. The results are indicated in Fig.23.

From Fig.23, it is found that each of Examples 3 and 4 wherein the solution to be treated was adjusted to be acidic or weekly acidic, showed a high decomposition speed as compared with Examples 5 and 6 wherein the solution to be treated was adjusted to be alkaline, and the treatment was carried out in a short time.

### Example 7

Using the decomposition device of Fig.16 and, as the solution to be treated, 3 liters of a high concentration aqueous solution of 150 mg/liter of tetrachloroethylene as a type of volatile organic chlorine compounds, after hydrogen peroxide was previously added to the solution to be treated so that hydrogen peroxide would be 10 times of tetrachloroethylene as molar concentration, simultaneous irradiation of ultrasonic waves of 380 kHz, 200 W and ultraviolet rays having the maximum intensity of ultraviolet rays at a wavelength of around 260 nm was carried out for treatment, and the variation with time of the concentration of the remaining tetrachloroethylene was measured. The results are indicated in Fig.24.

### Example 8

The variation with time of the concentration of the remaining tetrachloroethylene was measured under the same conditions as in Example 7 provided that hydrogen peroxide was not added to the solution to be treated. The results are indicated in Fig.24.

From Fig.24, it is found that in Example 7 wherein hydrogen peroxide was added to the solution to be treated, both decomposition rate and decomposition speed were high as compared with Example 8 wherein hydrogen peroxide was not added.

### Example 9

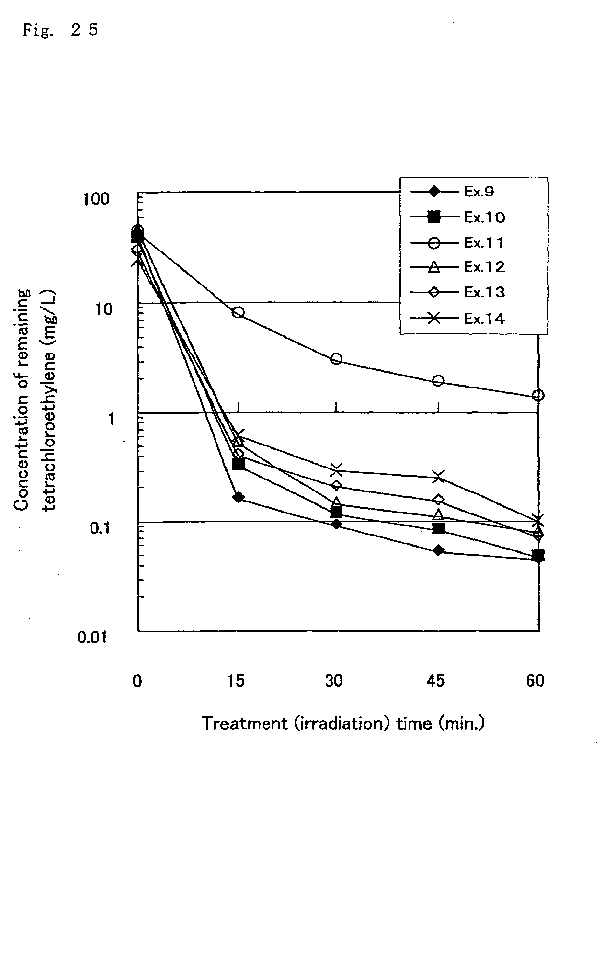

Using the decomposition device of Fig.17 and, as the solution to be treated, 3 liters of a high concentration aqueous solution of 40 mg/liter of tetrachloroethylene as a type of volatile organic chlorine compounds, and while maintaining the temperature of the solution to be treated at 40°C, simultaneous irradiation of ultrasonic waves of 200 kHz, 50 W and ultraviolet rays having the maximum intensity of ultraviolet rays at a wavelength of around 260 nm was carried out for treatment, and the variation with time of the concentration of the remaining tetrachloroethylene was measured. The results are indicated in Fig.25.

### Example 10

The variation with time of the concentration of the remaining tetrachloroethylene was measured under the same conditions as in Example 9 provided that the temperature of the solution to be treated was maintained at 60°C. The results are indicated in Fig.25.

### Example 11

The variation with time of the concentration of the remaining tetrachloroethylene was measured under the same conditions as in Example 9 provided that the temperature of the solution to be treated was maintained at 10°C. The results are indicated in Fig.25.

### Example 12

The variation with time of the concentration of the remaining tetrachloroethylene was measured under the same conditions as in Example 9 provided that the temperature of the solution to be treated was maintained at 25°C. The results are indicated in Fig.25.

### Example 13

The variation with time of the concentration of the remaining tetrachloroethylene was measured under the same conditions as in Example 9 provided that the temperature of the solution to be treated was maintained at 80°C. The results are indicated in Fig.25.

### Example 14

The variation with time of the concentration of the remaining tetrachloroethylene was measured under the same conditions as in Example 9 provided that the temperature of the solution to be treated was maintained at 90°C. The results are indicated in Fig.25.

From Fig.25, it is found that each of Examples 9 and 10 wherein the temperature of the solution to be treated was maintained at 40°C and 60°C, respectively, the decomposition speed was high and the treatment was conducted in a short time as compared with Examples 11 to 14 wherein the temperature of the solution to be treated was maintained at 10°C, 25°C, 80°C and 90°C, respectively.

### Industrial Applicability

As mentioned above, according to the present invention, ultrasonic waves and ultraviolet rays are simultaneously irradiated over the solution to be treated, or irradiation with ultrasonic waves and irradiation with ultraviolet rays are made in combination, for example, after irradiation of ultrasonic waves, ultraviolet rays are irradiated, and the ultraviolet rays-irradiating means is installed at a position such that ultraviolet rays will not interfere with the path of travel of ultrasonic waves, whereby it becomes possible to decompose the polluted water containing volatile substances such as organic halogen compounds from a high concentration level to a low concentration level which is an environmentally dischargeable standard level simply and efficiently without using a reagent, by which the polluted water can be discharged into public sewerage or used as recycled water. Further, it is also possible to decompose substances hardly decomposable by conventional oxidation such as organic substances and nitrogen or phosphorus compounds in environmental water, by a high oxidation power of OH radicals.

## Claims

1. A method for decomposing environmental pollutants, which comprises introducing a solution to be treated containing environmental pollutants into a reaction vessel, and irradiating the solution to be treated stored in the reaction vessel with ultrasonic waves and ultraviolet rays, wherein the reaction vessel is provided with an ultrasonic waves-irradiating means to irradiate ultrasonic waves and an ultraviolet rays-irradiating means at a position where it does not substantially interfere with a path of travel of ultrasonic waves to irradiate ultraviolet rays towards the solution to be treated, stored in the path of travel of the ultrasonic waves.

2. A method for decomposing environmental pollutants, which comprises introducing a solution to be treated containing environmental pollutants into a reaction vessel, and irradiating the solution to be treated stored in the reaction vessel with ultrasonic waves and ultraviolet rays, wherein the solution to be treated is introduced into a first reaction vessel and irradiated with ultrasonic waves, and then the solution treated with ultrasonic waves is introduced into a second reaction vessel and irradiated with ultraviolet rays.

3. The method for decomposing environmental pollutants according to Claim 1 or 2, wherein the environmental pollutants are organic halogen compounds.

4. The method for decomposing environmental pollutants according to Claim 3, wherein the solution to be treated is a waste liquor of dry cleaning.

5. The method for decomposing environmental pollutants according to any one of Claims 1 to 4, wherein the irradiation of ultrasonic waves and the irradiation of ultraviolet rays are carried out simultaneously or alternately, and repeated in plural cycles.

6. The method for decomposing environmental pollutants according to any one of Claims 1 to 5, wherein the irradiation of ultrasonic waves and/or the irradiation of ultraviolet rays is carried out in a state that pH of the solution to be treated is adjusted to be 2 to 6.

7. The method for decomposing environmental pollutants according to any one of Claims 1 to 6, wherein the irradiation of ultrasonic waves and/or the irradiation of ultraviolet rays is carried out after hydrogen peroxide is added to the solution to be treated or while adding hydrogen peroxide to the solution to be treated.

8. The method for decomposing environmental pollutants according to any one of Claims 1 to 7, wherein the irradiation of ultrasonic waves and/or the irradiation of ultraviolet rays is carried out while maintaining the temperature of the solution to be treated at a level of 40 to 60°C.

9. The method for decomposing environmental pollutants according to Claim 8, wherein by intermittently irradiating the ultrasonic waves and/or ultraviolet rays, the temperature of the solution to be treated is maintained at a level of 40 to 60°C.

10. The method for decomposing environmental pollutants according to any one of Claims 1 to 9, wherein, a reflective face is formed on a peripheral wall of the reaction vessel to which the ultraviolet rays-irradiating means is provided, by which the irradiated ultraviolet rays are hardly leaked outside the reaction vessel.

11. A device for decomposing environmental pollutants, which comprises a reaction vessel for storing a solution to be treated containing environmental pollutants, an ultrasonic waves-irradiating means for irradiating the solution to be treated in the reaction vessel with ultrasonic waves, and an ultraviolet rays-irradiating means for irradiating the solution to be treated in the reaction vessel with ultraviolet rays, wherein the ultraviolet rays-irradiating means is disposed at a position where it does not substantially interfere with a path of travel of ultrasonic waves irradiated by the ultrasonic waves-irradiating means and irradiates ultraviolet rays towards the solution to be treated, stored in the path of travel of the ultrasonic waves.

12. The device for decomposing environmental pollutants according to Claim 11, wherein the ultraviolet rays-irradiating means is disposed at a circumference of the path of travel of the ultrasonic waves.

13. The device for decomposing environmental pollutants according to Claim 11, wherein the ultraviolet rays-irradiating means is disposed in the reaction vessel along the path of travel of ultrasonic waves, and the ultrasonic waves-irradiating means is installed on the reaction vessel at a position such that the ultrasonic waves travel along the circumference of the ultraviolet rays-irradiating means.

14. The device for decomposing environmental pollutants according to any one of Claims 11 to 13, wherein the ultrasonic waves-irradiating means and ultraviolet rays-irradiating means are disposed such that the ultrasonic waves irradiated by the ultrasonic waves-irradiating means travel along the surface of the ultraviolet rays-irradiating means.

15. A device for decomposing environmental pollutants, which comprises a reaction vessel in which a solution to be treated containing environmental pollutants, a means for irradiating ultrasonic waves to the solution to be treated in the reaction vessel, and a means for irradiating ultraviolet rays to the solution to be treated in the reaction vessel, wherein the reaction vessel comprises a first reaction vessel for storing the solution to be treated and a second reaction vessel for storing the solution to be treated flowing out of the first reaction vessel, the first reaction vessel is provided with an ultrasonic waves-irradiating means for irradiating ultrasonic waves to the solution to be treated, and the second reaction vessel is provided with an ultraviolet rays-irradiating means for irradiating ultraviolet rays to the solution treated with ultrasonic waves.

16. The device for decomposing environmental pollutants according to any one of Claims 11 to 15, wherein the device comprises a means for adding a pH-adjusting agent to adjust the pH of the solution to be treated to 2 to 6.

17. The device for decomposing environmental pollutants according to any one of Claims 11 to 16, wherein the device comprises a hydrogen peroxide-adding means to add hydrogen peroxide to the solution to be treated.

18. The device for decomposing environmental pollutants according to any one of Claims 11 to 17, wherein the device comprises a temperature-controlling means to maintain the temperature of the solution to be treated at a level of 40 to 60°C.

19. The device for decomposing environmental pollutants according to Claim 18, wherein the device comprises an irradiation-controlling means to maintain the temperature of the solution to be treated at a level of 40 to 60°C by intermittently irradiating the ultrasonic waves and/or ultraviolet rays.

20. The device for decomposing environmental pollutants according to any one of Claims 11 to 19, wherein the device comprises a reflective face on a peripheral wall of the reaction vessel to which the ultraviolet rays-irradiating means is disposed.

21. The device for decomposing environmental pollutants according to any one of Claims 11 to 20, wherein the device comprises a plural stage of the combination of the ultrasonic waves-irradiating means and ultraviolet rays-irradiating means.

22. The device for decomposing environmental pollutants according to any one of Claims 11 to 21, which is used for treatment of a solution to be treated containing organic halogen compounds as the environmental pollutants.

23. The device for decomposing environmental pollutants according to Claim 22, which is used for treatment of waste liquor of dry cleaning.
